# FASCICULE DE BREVET EUROPEEN

(11) **EP 0 678 643 B1**
(45) Date de publication et mention de la délivrance du brevet: **05.08.1998**
(21) Numéro de dépôt: 95105719.9
(22) Date de dépôt: 18.04.1995
(51) Int. Cl.: E05F 15/00, B60J 7/057

(54) **Dispositif de commande de lève-vitres pour véhicule, utilisant un nombre réduit de fils de connexion et intégrant la fonction d'antipincement**
Kraftfahrzeugfensterheber mit Einklemmschutz und verringerter Anzahl von Anschlussdrähten
Vehicle window actuator with antisqueeze function and a reduced number of connection wires

(30) Priorité: 20.04.1994 FR 9404850
(43) Date de publication de la demande: 25.10.1995
(73) Titulaire: VALEO ELECTRONIQUE, 94042 Creteil Cédex (FR)
(72) Inventeur: Boucheron, Jean-Louis, F-77176 Savigny le Temple (FR); Blin, Benoît, F-75020 Paris (FR)
(74) Mandataire: Gamonal, Didier

(56) Documents cités:
- EP-A- 0 396 090
- EP-A- 0 473 068
- EP-A- 0 530 472
- DE-U- 9 210 078
- GB-A- 2 267 161

## Description

La présente invention concerne un dispositif lève-vitres pour véhicule, intégrant la fonction d'antipincement et comportant un nombre réduit de fils de câblage.

Elle trouve son application dans le domaine automobile, notamment dans le contrôle des fonctions déportées dans les portières de véhicules.

Dans l'art antérieur, on connaît des dispositifs de commande électrique pour lève-vitres dont les développements successifs ont permis de proposer des fonctions toujours plus complexes, apportant un confort d'utilisation toujours plus grand.

Parmi ces fonctions, on trouve notamment la possibilité de commander l'ouverture et la fermeture de la vitre côté passager depuis le côté conducteur, ainsi que la possibilité de commander l'ouverture et la fermeture soit en mode continu soit en mode impulsionnel, ce dernier permettant de faire descendre la vitre jusqu'en butée basse ou de la faire remonter jusqu'en butée haute par simple pression furtive sur une touche de commande.

Une autre fonction, que l'on trouve plus récemment dans l'état de la technique, consiste à commander la fermeture automatique de l'ensemble des ouvrants d'un véhicule lorsque l'utilisateur quitte le véhicule et déclenche le verrouillage des portières et/ou des immobiliseurs à l'aide d'une télécommande ou d'un dispositif passif.

Cette dernière fonction, ainsi que la fonction de commande d'ouverture et de fermeture des vitres en mode impulsionnel, nécessitent de recourir à un dispositif de protection antipincement. En effet, dans la mesure où, dans les deux cas, la fermeture de la vitre s'effectue sans contrôle de l'utilisateur, celui-ci ne pourra interrompre la remontée de la vitre si un occupant vient à avoir le doigt coincé par la vitre ou vient à pencher la tête à travers la vitre en cours de fermeture, de telles fonctions peuvent se révéler très dangereuses si aucune protection n'est prise.

Les normes de sécurité imposent d'utiliser un système permettant de détecter si un tel phénomène de coincement se produit lors de la remontée de la vitre, et, si tel est le cas, de commander la redescente de la vitre afin de dégager l'objet coincé qui, comme nous l'avons vu, peut être le doigt ou le cou d'un occupant.

Dans l'art antérieur, on a proposé différents systèmes permettant de réaliser la fonction antipincement, dont certains fonctionnent autour d'un principe consistant à détecter si le moteur d'entraînement rencontre une résistance anormale au cours de la remontée de la vitre, et d'autres consistent à mettre en oeuvre un certains nombre de capteurs destinés à détecter la présence d'un objet sur le parcours de la vitre.

Ces différents systèmes peuvent constituer des solutions satisfaisantes au point de vue du niveau de sécurité atteint, mais impliquent un nombre d'équipements accru.

La mise en oeuvre d'un capteur tel qu'un capteur à effet Hall nécessite à elle seule trois fils de câblage, dont deux pour l'alimentation de la cellule Hall et un pour la lecture de l'information. D'une façon générale, l'alimentation, la commande et l'exploitation des organes nécessaires au contrôle des différentes fonctions liées au lève-vitres que nous venons d'aborder, se traduisent par un accroissement des longueurs de câble à l'intérieur du véhicule et dans les portières notamment.

A cela s'ajoutent en général trois fils pour la commande du sens de rotation du moteur, ce qui porte à six au moins le nombre des fils qu'il est nécessaire de passer vers la portière, auxquels s'ajoutent encore des fils utilisés pour recueillir des informations de commande issues de commutateurs situés dans les portières et actionnables par l'utilisateur.

De plus, le fait de proposer ces fonctions simultanément sur les quatre portières du véhicule occasionne une multiplication de la plupart des composants requis pour leur mise en oeuvre, et donc des fils de connexion.

Il en est ainsi par exemple des composants utilisés pour la commande de puissance des moteurs qui fait appel à deux relais par moteur et donc par portière, afin de contrôler le sens de rotation dudit moteur.

Dans l'art antérieur, on a proposé de résoudre le problème de la réduction du nombre de fils à la traversée de portière par le recours à un système multiplexé. Un tel système est par exemple décrit dans le document EP 396 090. Cependant, un système multiplexé augmente considérablement le coût de la fonction lève-vitre, car il oblige à disposer un module de gestion de multiplexage ("slave unit" en anglais) dans chaque portière.

Afin de porter remède aux inconvénients de l'état de la technique précités, la présente invention propose un dispositif lève-vitres pour véhicule, intégrant la fonction d'antipincement, comprenant :
- une unité de calcul comportant notamment :
   - une source d'alimentation de puissance,
   - un calculateur tel qu'un microcontrôleur,
- et au moins un module de commande de lève-vitres placé dans une portière du véhicule comportant :
   - un moteur d'entraînement pour une vitre de portière ;
   - un organe de commande, tel qu'un contacteur ou commutateur actionnable par un utilisateur.

L'invention se caractérise en ce que la liaison entre ladite unité de calcul et ledit module de commande de lève-vitres est constituée par quatre fils dont deux sur lesquels est transmise la tension d'alimentation de puissance du moteur d'entraînement, les deux autres fils servant à transmettre depuis ledit module de commande de lève-vitre vers ladite unité de calcul un signal périodique permettant simultanément :
- la capture d'une information de commande issue de l'organe de commande.
- la mesure de la vitesse de rotation du moteur ;
- la détection de la butée haute et/ou de la butée basse de la vitre ;
- le repérage de la position de celle-ci ;
et en ce que le module de commande de lève-vitres comporte des moyens pour générer le signal périodique sous la forme d'une tension en créneaux dont :
- la période porte une information sur la vitesse de rotation du moteur ;
- le niveau maximum constitue une information caractéristique de la commande désirée par l'utilisateur.

Selon une caractéristique supplémentaire de l'invention, l'unité de calcul comporte des moyens pour piloter séquentiellement les modules lève-vitres de chaque portière.

Selon une caractéristique supplémentaire de l'invention l'organe de calcul (450) comporte de plus des moyens de commutation de signe pour déterminer le signe de la tension d'alimentation de puissance qui est transmise au module de commande de lève-vitres de chaque portière, en fonction du sens de rotation souhaité du moteur d'entraînement dudit module de commande de lève-vitres, ces moyens de commutation de signe étant communs à tous les modules lève-vitres.

Selon une caractéristique supplémentaire de l'invention, le module de commande de lève-vitres comporte des moyens tels qu'un aimant et un capteur magnétique pour générer une information sur la rotation du moteur d'entraînement.

Selon une caractéristique supplémentaire de l'invention, le capteur magnétique, tel qu'une cellule à effet Hall, est alimenté et sa tension d'alimentation est générée à partir de la tension d'alimentation de puissance du moteur d'entraînement par un circuit électronique de régulation, permettant de lui assurer un signe constant, c'est à dire indépendant du signe de ladite tension d'alimentation de puissance du moteur d'entraînement, ainsi qu'une amplitude régulée.

Selon une caractéristique supplémentaire de l'invention, l'unité de calcul comporte des moyens pour :
- calculer la vitesse de rotation du moteur d'entraînement par analyse de la période du signal périodique ;
- calculer la position de la vitre par comptage/décomptage des fronts montants du signal périodique ;
et pour en déduire une éventuelle situation de butée haute ou de butée basse de la vitre, ou une situation de pincement lors de le remontée de ladite vitre.

Selon une caractéristique supplémentaire de l'invention l'unité de calcul comporte des moyens pour inverser le signe de la tension d'alimentation de puissance du moteur d'entraînement lorsqu'elle détecte une situation de pincement, afin de commander la redescente de la vitre et de libérer l'objet pincé.

Selon une caractéristique supplémentaire de l'invention au moins un module de commande de lève-vitres, par exemple celui qui est disposé dans la portière du conducteur, comporte une pluralité de fils de liaison avec l'unité de calcul dont deux sur lesquels est transmise la tension d'alimentation de puissance du moteur d'entraînement, les autres fils étant supérieurs à deux et servant à transmettre une pluralité de signaux analogiques de commande sur autant d'entrées analogiques du microcontrôleur.

Dans le dispositif de l'invention, une seule électronique est nécessaire pour gérer la remontée des vitres, et cela même en prenant en compte les aspects de sécurité liés à la fonction antipincement.

De plus, un seul relais est nécessaire pour la commande du moteur dans chaque portière, et non plus deux comme dans les dispositifs de l'état de la technique, puisque le signe de la tension d'alimentation du moteur, et donc le sens de rotation, est défini au niveau de l'unité de calcul.

Enfin, le câblage au passage de la portière est réduit puisqu'il n'y a plus besoin que de deux fils de puissance pour l'alimentation du moteur, et deux fils de commande pour contrôler le lève vitre et recueillir les signaux de commande au niveau de l'organe de commande situé dans la portière.

D'autres caractéristiques et avantages de la présente invention apparaîtront à la lecture de la description qui va suivre en référence aux dessins annexés qui sont :
- la figure 1 : un mode de réalisation d'une unité de commande de portière selon l'invention utilisant un contact du type relais à lames souples ;
- la figure 2 : un schéma représentant les signaux de commande portés par la tension de mesure Vmes;
- la figure 3 : un mode de réalisation d'une unité de commande de portière selon l'invention utilisant un capteur du type cellule à effet Hall ;
- la figure 4 : un schéma du dispositif lève-vitres selon l'invention ;
- la figure 5 : un schéma d'un circuit analogique d'entrée connecté entre l'unité de commande qui est située dans la portière et le calculateur de l'unité de calcul ;
- la figure 6 : un schéma représentant des signaux du circuit de mesure de la figure 5.

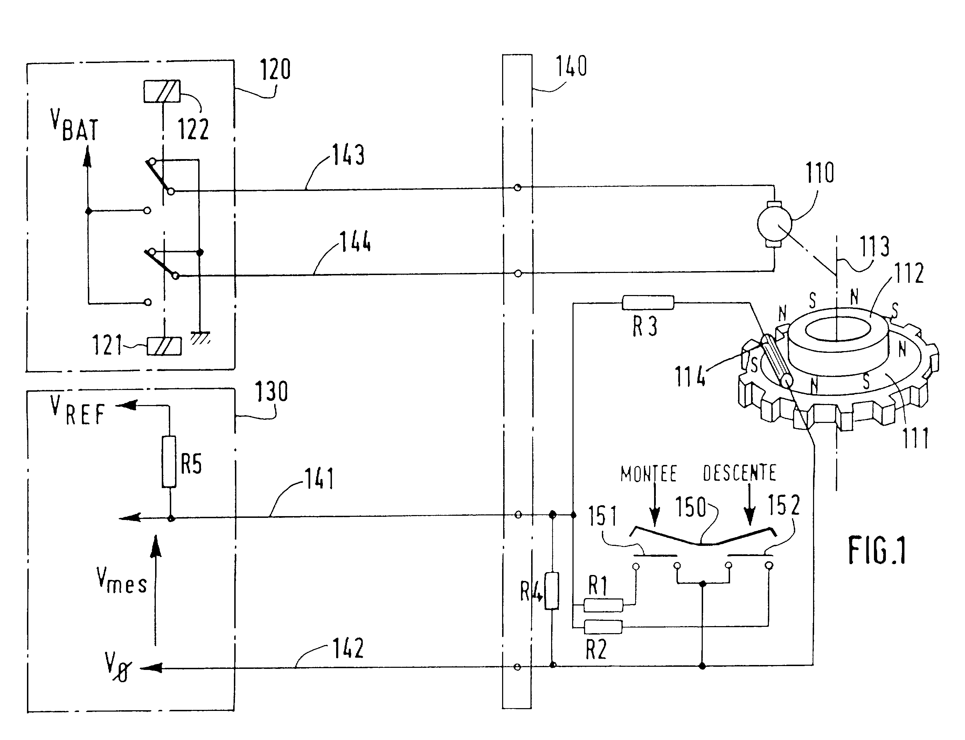

A la figure 1, un moteur d'entraînement 110 d'une vitre non représentée est alimenté par un circuit d'alimentation 120. Le moteur d'entraînement 110 comporte un réducteur dont une roue 111 comporte un aimant 112 doté d'une pluralité de pôles magnétiques Nord/Sud alternés. L'aimant 112 est de forme circulaire et est disposé de telle façon que son axe de rotation soit confondu avec l'axe de rotation 113 de la roue 111 du réducteur.

Un contact 114 du type relais à lames souples, tel qu'un contact REED, est disposé à proximité de l'aimant circulaire 112. Lorsque celui-ci est animé d'un mouvement de rotation autour de l'axe 113, le contact 114 est alternativement ouvert ou fermé, selon que le pôle magnétique de l'aimant qui est à sa proximité immédiate est un pôle Nord ou un pôle Sud.

Lorsque le contact 114 est fermé, une impédance telle qu'une résistance R3 se trouve connectée en parallèle sur une impédance telle qu'une résistance R4.

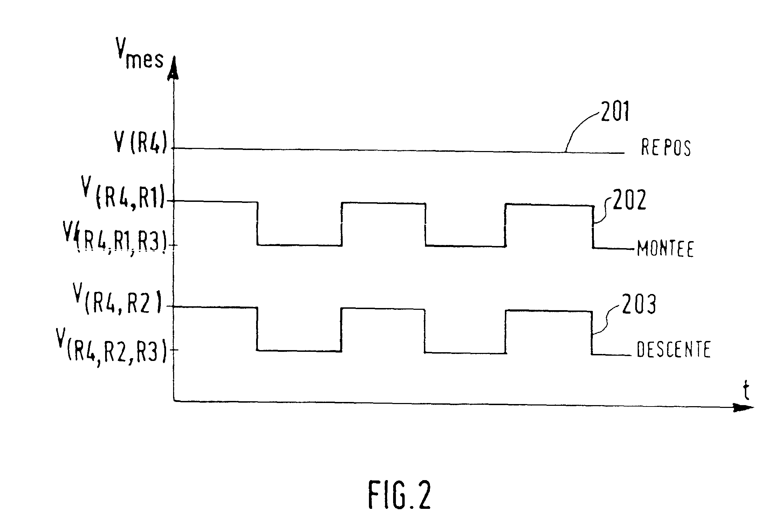

De ce fait, il s'ensuit une modification d'une tension de mesure Vmes prise aux bornes de la résistance R4, selon la disposition classique d'un pont diviseur de tension 130 constitué par la résistance R4 et une résistance R5 connectées en série entre un point de tension V0 et un point de tension Vréf. La tension Vmes passe ainsi d'un niveau V(R4) à un niveau V(R3,R4) représentés à la figure 2.

Dans un mode de réalisation possible de l'invention, le point de tension V0 est connecté à la masse du circuit et le point de tension Vréf est connecté au plus après contact de la batterie du véhicule.

L'alternance des pôles Nord et Sud qui défilent devant le contact 114 permet de produire un signal rectangulaire entre les niveaux V(R4) et V(R3,R4), dont la période est liée à la vitesse de rotation du moteur d'entraînement 110.

L'analyse du passage de la tension de mesure d'un niveau à l'autre permet donc de déduire une information sur la vitesse de rotation du moteur d'entraînement. De plus, le comptage ou le décomptage des impulsions ainsi générées, en liaison avec la connaissance de la position initiale de la vitre, permet d'en déduire une information sur la position absolue de celle-ci.

La commande du lève-vitres est assurée par un contacteur 150 à au moins deux positions, l'une utilisée pour commander la montée et l'autre utilisée pour la descente de la vitre. Ce contacteur 150 comporte à cet effet deux contacts 151 et 152 qui lorsqu'ils sont établis, opèrent la mise en parallèle, respectivement d'une impédance telle qu'une résistance R1 et d'une impédance telle qu'une résistance R2, sur la résistance R4.

Ainsi la tension de mesure Vmes est représentative, d'une commande de montée ou de descente de la vitre ou de la vitesse de rotation du moteur, ou d'une commande de montée ou de descente de la vitre et de la vitesse de rotation du moteur, selon l'état des contacts 151, 152, et 114 qui contrôlent la mise en parallèle respectivement des résistances R1, R2 et R3 sur la résistance R4.

Par ailleurs, la tension de mesure Vmes est transmise sur une liaison constituée par deux fils 141 et 142. De plus, la tension d'alimentation du moteur d'entraînement 110 est fournie par le circuit d'alimentation 120 et est transmise par l'intermédiaire de deux fils 143 et 144.

C'est donc en tout et pour tout quatre fils 141, 142, 143 et 144 qui traversent le passage de portière 140.

Le circuit d'alimentation 120 est constitué par deux relais 121 et 122 qui sont commandables de façon à produire une tension d'alimentation positive ou négative, par exemple de valeur égale à la tension batterie Vbat, et qui est transmise au moteur d'entraînement 110 par l'intermédiaire de la liaison 143,144.

A la figure 2 on a représenté les signaux de commande portés par la tension de mesure Vmes en fonction de l'état des contacts 151,152 et 114. Lorsque les contacts 151 et 152 sont tous deux ouverts, c'est-à-dire lorsqu'aucune action de montée ou de descente de la vitre n'est commandée par l'utilisateur, la tension de mesure Vmes est maintenue à un niveau V(R4) qui correspond à un état de repos.

En effet, le moteur d'entraînement 110 ne tourne pas et le signal mesuré a la forme représentée par la courbe 201 qui est constante d'amplitude V(R4).

Lorsque l'utilisateur actionne la montée de la vitre, il appuie sur le commutateur 150 de façon à fermer le contact 151.

Le moteur 110 tourne alors dans un premier sens, ce qui entraîne la création d'un signal rectangulaire représenté à la figure 2 par la courbe 202 qui oscille entre le niveau supérieur V(R4,R1) et le niveau V(R4,R1,R3).

En effet, la fermeture du contact 151 entraîne la mise en parallèle de la résistance R1 sur la résistance R4, et l'alternance des pôles Nord et Sud défilant devant le contact à lames souples 114 entraîne la mise en parallèle en alternance de la résistance R3 sur les résistances R4 et R1.

Lorsque l'utilisateur actionne la descente de la vitre, il appuie sur le commutateur 150 de façon à fermer le contact 152.

Le moteur 110 tourne alors dans l'autre sens, ce qui entraîne aussi la création d'un signal rectangulaire représenté à la figure 2 par la courbe 203 qui oscille entre le niveau supérieur V(R4,R2) et le niveau V(R4,R2,R3).

En effet, de la même façon que précédemment, la fermeture du contact 152 entraîne la mise en parallèle de la résistance R2 sur la résistance R4, et l'alternance des pôles Nord et Sud défilant devant le contact à lames souples 114 entraîne la mise en parallèle en alternance de la résistance R3 sur les résistances R4 et R2.

La géométrie du commutateur 150 est telle qu'une commande simultanée de montée et de descente est impossible.

Dans un mode de réalisation préféré de l'invention, le dimensionnement des résistances R1-R4 est tel que les signaux de commande 201,202 et 203, ainsi que les niveaux hauts et bas des signaux 202 et 203, sont compris entre deux valeurs définies telles que 0 et 5 Volts, et suffisamment différenciées pour être exploitables par l'unité de calcul.

En effet, ces signaux de commande sont transmis à un convertisseur analogique/digital d'un calculateur de l'unité de calcul, tel qu'un microcontrôleur disposant d'un convertisseur analogique/digital intégré, et qui opère une reconnaissance du niveau d'amplitude de ce signal lors d'une étape de décision consistant à faire correspondre à un niveau de tension donné un signal numérique représentatif de la commande à effectuer. Cette décision ne peut se faire que si les niveaux possibles que peut prendre le signal de commande sont suffisamment distincts l'un de l'autre.

Les informations de commande sont ainsi transmises en utilisant un codage par niveau de tension. Nous verrons plus loin qu'une unité de calcul comporte des moyens pour détecter le niveau haut du signal périodique de commande, et pour déduire l'information de commande de la valeur de ce niveau.

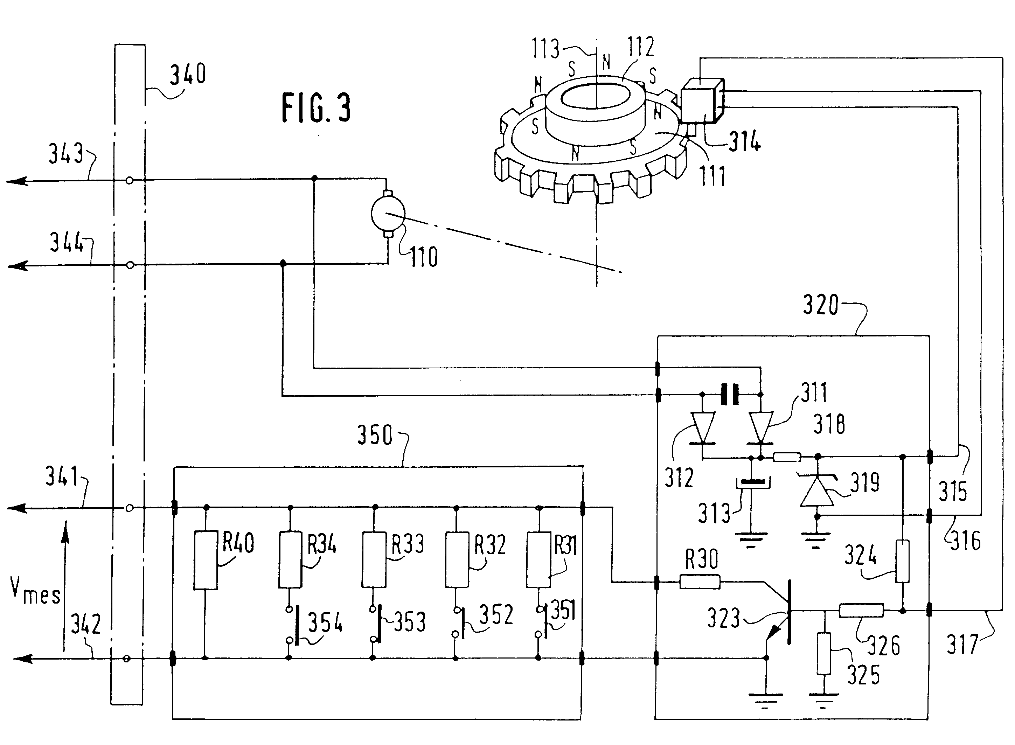

A la figure 3, on a représenté un autre mode de réalisation de l'unité de commande de portière.

Dans ce mode de réalisation le contact à lames souples est remplacé par une cellule à effet Hall, qui rempli le même rôle.

Les capteurs à effet hall sont plus fiables et plus faciles à mettre en oeuvre dans ce type d'application.

Cependant, ils nécessitent d'être alimentés en permanence pour fonctionner.

La cellule 314 est connectée par l'intermédiaire de trois fils, dont deux 315,316 sont utilisés pour son alimentation et un 317 pour transmettre l'information de mesure.

Un module d'alimentation et de mise en forme 320 reçoit la tension de puissance qui est délivrée au moteur d'entraînement par l'intermédiaire de deux fils 343 et 344 et, après mise en forme, permet l'alimentation de la cellule à effet Hall 314 par l'intermédiaire des fils 315 et 316.

La mise en forme consiste à maintenir une polarité constante à la tension d'alimentation ainsi transmise.

En effet, le signe de la tension de puissance, disponible sur les lignes 343 et 344, dépend du sens de rotation désiré du moteur, c'est-à-dire du sens du mouvement de la vitre.

Un dispositif mettant en oeuvre deux diodes 311 et 312, un condensateur 313 et une diode Zéner 319 ainsi qu'une résistance 318 permet d'assurer une tension disponible entre les fils 315 et 316 ayant un signe constant positif et un niveau régulé.

L'information de mesure, fournie par la cellule à effet Hall 314, constituant une information sur la position du moteur, est transmise au module d'alimentation et de mesure 320 par l'intermédiaire du fil 317.

Un transistor 323 et ses résistances de polarisation 324,325,326 opèrent la mise en forme du signal de mesure.

Le transistor 323 est chargé par une résistance de collecteur R30. Cette résistance joue le même rôle que la résistance R4 de la figure 2.

Par ailleurs, un commutateur (non représenté) et comportant quatre positions permet de fermer sélectivement quatre contacteurs 351,352,353,354, qui entraînent respectivement la mise en parallèle de résistances R31,R32,R33 sur la résistance R30.

Le commutateur à quatre positions est utilisé pour générer au moins quatre fonctions, qui sont, dans un mode préféré de réalisation, la commande de descente en continu, la commande de montée en continu, la commande de montée en impulsionnelle et la commande de descente en impulsionnelle.

On constate que ce mode de réalisation n'augmente pas le nombre de fils qu'il est nécessaire d'amener à travers le passage de portière 340 : deux fils 343 et 344 sont utilisés pour transmettre la tension de puissance et deux autres fils 341 et 342 sont utilisés pour transmettre l'information de commande et l'information sur la vitesse de rotation du moteur à l'unité de calcul.

L'allure des signaux de commandes que peut porter la tension de mesure Vmes qui est disponible entre les fils 341 et 342 est identique à celle explicitée ci-dessus en regard de la figure 2.

Quatre signaux différents sont possibles, en plus du signal correspondant à l'état de repos, puisque quatre commandes différentes sont possibles.

En fait, le nombre de commandes différentes qu'il est possible d'acheminer n'est limité que par le pouvoir de résolution du convertisseur numérique/analogique du microcontrôleur de l'unité de calcul.

On peut par exemple, et sans rien ajouter au principe de l'invention, transmettre une commande de fermeture centralisée des portières actionnable par le conducteur ou par un passager à l'aide d'un commutateur situé dans la portière, une commande de fermeture d'un toit ouvrant, etc...

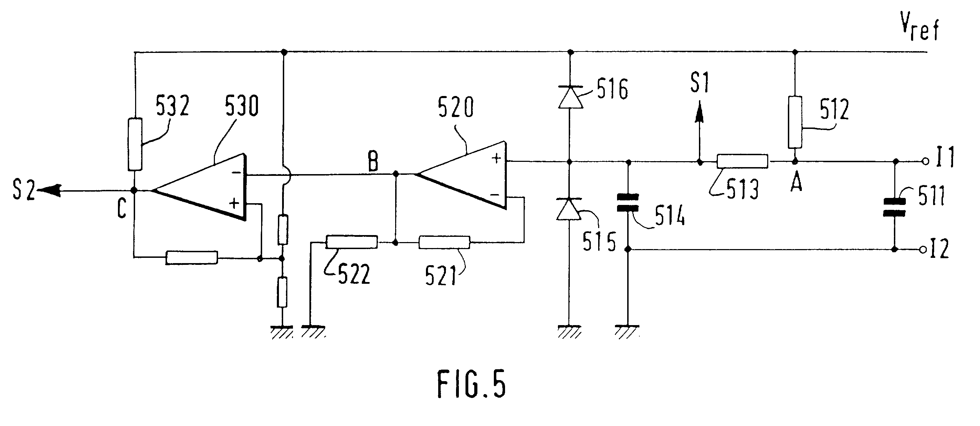

A la figure 5, on a représenté un circuit analogique d'entrée destiné à permettre l'exploitation de la tension de mesure Vmes transmise par l'unité de commande sur les fils 141,142 ou 341,342.

Ce circuit a un double rôle :
- acheminer l'information correspondant à la nature de la commande à effectuer vers l'unité de calcul qui comporte des moyens pour reconnaître cette commande en fonction du niveau de tension du signal qu'elle reçoit.
- mettre en forme le signal de mesure de la vitesse du moteur qui est délivré par la cellule Hall, afin de permettre son exploitation par le calculateur de l'unité de calcul ;

Le module analogique d'entrée comporte deux entrées I1 et I2 auxquelles sont connectés les fils 341 et 342 respectivement. Ces deux entrées sont découplées par un condensateur de découplage 511.

Le point A du montage, qui est confondu avec l'entrée I1 est connecté à la borne d'alimentation positive Vréf du montage par l'intermédiaire d'une résistance 512. Dans un mode de réalisation préféré de l'invention, la borne d'alimentation positive du montage Vréf est portée à un potentiel égal à 5 Volts.

L'entrée I2 est reliée à la borne d'alimentation négative du montage qui, dans un mode de réalisation préféré de l'invention est confondue avec la masse électrique du véhicule.

Une résistance 513 est connectée en série entre le point A et une première sortie S1 du montage qui est une sortie analogique destinée à fournir à un convertisseur analogique/digital du calculateur de l'unité de calcul une tension analogique dont l'amplitude porte l'information relative à la nature de la commande à effectuer.

Un second condensateur de découplage référencé 514, ainsi qu'une diode 515, qui sont connectés à la masse, alors qu'une diode 516 qui est connectée au +Vbat, constituent un étage d'entrée d'un étage d'amplification 520.

Cet étage d'amplification peut être constitué par un amplificateur opérationnel. Son gain G est défini par les valeurs de deux résistances 521 et 522. La sortie de l'étage amplificateur 520 est confondue avec un point B.

Un étage de mise en forme 530 tel qu'un circuit comparateur appelé communément « TRIGGER » est disposé en sortie afin de délivrer un signal numérique sous la forme de créneaux de niveau haut égal à la tension d'alimentation du montage Vréf.

Dans le mode de réalisation préféré de l'invention, l'amplitude de ce signal numérique est de 5 volts ce qui constitue un signal exploitable par des circuits logiques en technologie TTL.

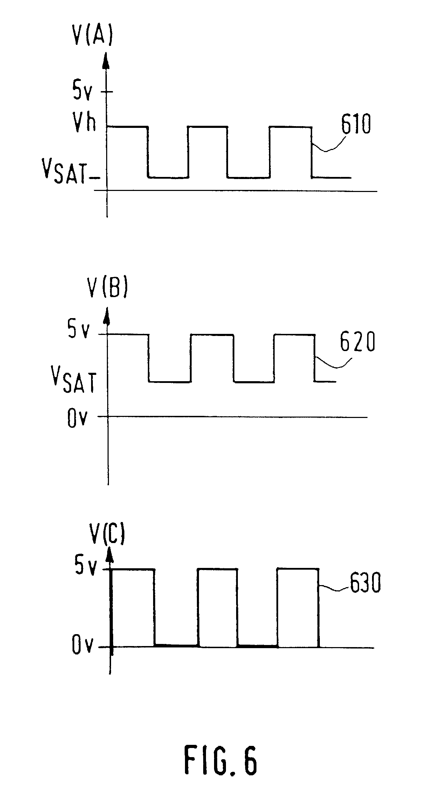

A la figure 6, on a représenté les signaux disponibles aux points de mesure A,B et C du montage analogique d'entrée de la figure 5.

Comme nous l'avons vu, le point A est confondu avec l'entrée du montage. La tension V(A) est donc égale à la tension de mesure Vmes. Il s'agit d'une tension en créneau V(A) dont le niveau bas est défini par la valeur Vsat correspondant à la tension émetteur-collecteur du transistor 323 de la figure 3 lorsqu'il est à la saturation, et dont le niveau haut est défini par la valeur équivalente des résistances R1,R2,R3,R4 ou R30,R31,R32, R33,R34 lorsqu'elles sont mises en parallèle.

Dans tous les cas le niveau haut Vh reste inférieur à 5 Volts. Cette tension V(A) est représentée à la figure 6 par la courbe 610.

Au point B du montage analogique d'entrée, le signal a été amplifié par l'étage d'amplification 520. Il est porté par une tension V(B), représentée à la figure 6 par la courbe 620, qui est égale à la tension V(A) au point A multipliée par le gain G de l'étage d'amplification 520, de sorte que le niveau bas est égal à G*Vsat. Par ailleurs, le gain G de l'étage d'amplification 520 est réglé de façon à ce que le niveau haut de ce signal soit toujours égal à 5 Volts c'est à dire à la tension de saturation de l'amplificateur 520.

Au point C la tension V(C) résulte de la mise en forme de la tension V(B) qui résulte du passage dans l'étage comparateur 530. Cette tension V(C), représentée à la figure 6 par la courbe 630, est donc une tension en créneau dont le niveau haut est égal à 5 Volts, soit un niveau logique 1, et dont le niveau bas est égal à 0 Volts, soit un niveau logique 0.

On voit que le signal disponible à la seconde sortie S2 du montage analogique d'entrée de la figure 5, est un signal qui porte l'information sur la vitesse de rotation du moteur par l'intermédiaire de sa période qui est variable avec ladite vitesse.

Le comptage des impulsions d'une horloge interne de l'unité de calcul qui sont produites lorsque le signal logique issu de la sortie S2 du montage analogique d'entrée est à l'état logique 1, permet de déduire la valeur de la vitesse du moteur d'entraînement de la vitre.

Lorsque cette vitesse devient inférieure à une valeur limite déterminée, cela signifie que le moteur d'entraînement de la vitre rencontre un surcouple résistant. Dans l'absolu, la période du signal logique devient infinie lorsque la vitre est en butée franche.

Par ailleurs, la détection des fronts montants de ce signal logique, et le comptage/décomptage desdits fronts est utilisé par l'unité de calcul pour déterminer la position de la vitre. L'unité de calcul comporte des moyens, tels que des registres d'une mémoire non volatile, pour mémoriser la valeur des positions de butée haute et de butée basse de la vitre.

La combinaison de l'information sur la vitesse de déplacement de la vitre d'une part, c'est à dire sur la vitesse de rotation du moteur d'entraînement, et de l'information sur la position de ladite vitre d'autre part, permettent à l'unité de calcul de déceler la fermeture complète ou l'ouverture complète de la vitre ou la présence d'un obstacle empêchant sa fermeture.

On voit donc que le dispositif selon l'invention permet de réaliser la fonction antipincement tout en ne requérant qu'un nombre de fils reliant chaque portière à l'unité de calcul qui est réduit au minimum.

Par ailleurs, le nombre de composants utilisés pour la commande en puissance des moteurs, notamment le nombre de relais, est aussi réduit de façon optimale.

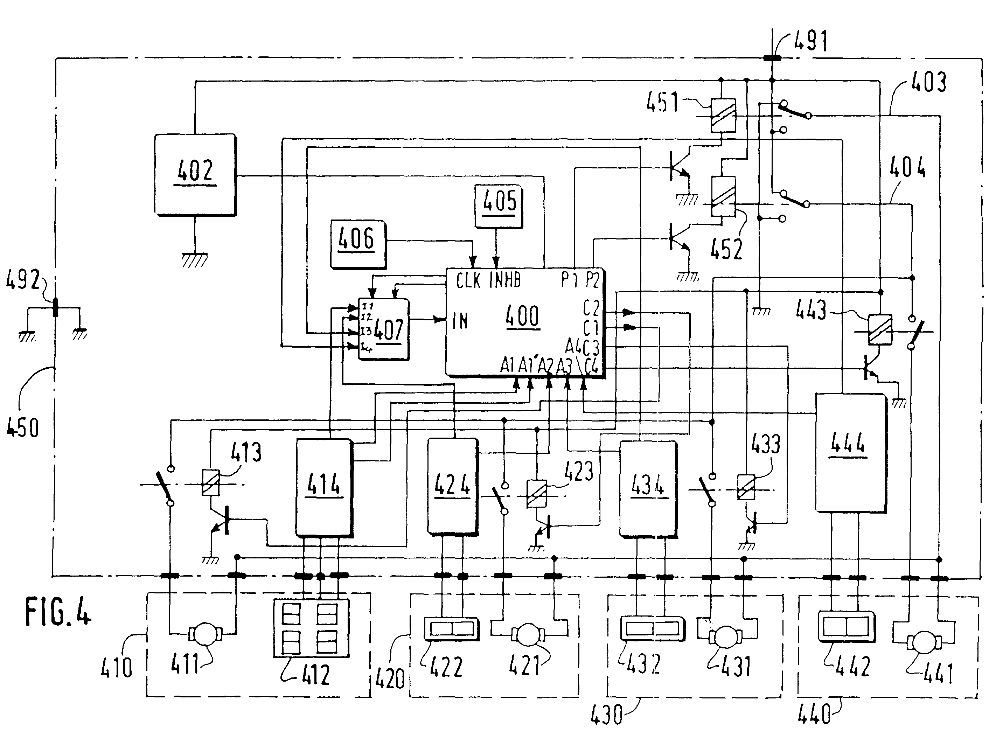

Cet aspect de l'invention apparaîtra mieux à la lecture de la figure 4 dont une description détaillée est donnée ci-dessous.

Sur cette figure, on a représenté l'unité de calcul 450 ainsi que son raccordement à quatre modules lève-vitres de portières, respectivement référencés 410,420,430 et 440. Cette configuration ne constitue qu'un exemple de réalisation et ne doit pas être interprétée comme une limitation de l'invention. En particulier, la commande d'un lève-vitres supplémentaire pour la vitre arrière d'un véhicule, ou la commande électrique d'un toit ouvrant pourraient se faire sur le même principe.

Chaque module de commande de lève-vitres comporte notamment un moteur d'entraînement 411,421,431 et 441 et un module de commande 412,422,432 et 442.

L'unité de calcul 450 est alimentée par l'intermédiaire d'une borne 491 d'alimentation positive, par exemple connectée à la borne positive de la batterie du véhicule, et une seconde borne 492 qui est la borne de la masse électrique.

L'unité de calcul 450 comporte un calculateur 400, tel qu'un microcontrôleur, qui est raccordé à une horloge 406, à un dispositif d'inhibition 405, et qui est alimenté par un module d'alimentation et de régulation 402. Dans le mode de réalisation préféré de l'invention, le module d'alimentation et de régulation 402 fournit une tension régulée de 5 Volts d'amplitude, afin d'alimenter les circuits électroniques.

Le calculateur 400 comporte notamment trois entrées analogiques A2,A3,A4 destinées à recevoir des signaux d'entrée analogiques issus de trois modules d'entrée 424,434 et 444 dont le fonctionnement a été décrit ci-dessus en regard de la figure 5. Ces trois modules d'entrée 424,434 et 444 sont reliés aux modules lève-vitres des trois portières autres que la portière du conducteur.

En effet, dans un mode de réalisation préféré de l'invention, le module de commande de lève-vitres 410 de la portière du conducteur est équipé d'un module de commande 412 comportant quatre commutateurs qui permettent au conducteur de commander l'ouverture et la fermeture de l'ensemble des quatre portières du véhicule automobile.

Le nombre des commandes à transmettre peut alors être trop élevé pour que leur transmission sur deux fils soit impossible en utilisant le codage par niveau de tension décrit en regard de la figure 2. En effet, nous avons vu que les niveaux correspondant à des commandes distinctes doivent être suffisamment séparés pour être distingués par le microcontrôleur. C'est pourquoi, dans les cas où le nombre de signaux de commande différents à transmettre est trop important pour que l'ensemble de ces signaux soient supportés sur deux fils selon le principe de codage par niveaux de tension décrit plus haut, trois fils peuvent être utilisés pour relier le module de commande 412 et le calculateur 400. Celui-ci reçoit alors deux signaux analogiques sur des entrées analogiques A1 et A1'. L'analyse du niveaux des tensions présentes sur ces entrées lui permet au calculateur 400 de reconnaître celle des quatre portières qui est concernée par la commande désirée par l'utilisateur.

Chacun des modules d'entrée 414,424,434,444 fournit aussi un signal d'entrée logique à un module de sélection 407 comportant des entrées I1,I2,I3,I4 et dont le rôle est de sélectionner le signal d'entrée logique que le calculateur 400 doit prendre en compte pour le calcul de la vitesse de rotation du moteur d'entraînement de la vitre de la portière dont la commande est prise en compte par le calculateur 400.

A cet effet, le module de sélection 407 reçoit deux signaux logiques du calculateur 400 qui portent, sous la forme d'un nombre binaire compris ente 00 et 11, l'information relative à cette portière. De plus, il fournit un signal d'entrée sur l'entrée IN du calculateur 400, qui est le signal d'entrée logique sélectionné.

En effet, le dispositif lève-vitres selon l'invention fonctionne de façon partagée pour la commande séquentielle de l'ensemble des portières du véhicule automobile.

Le calculateur 400 comporte des moyens pour déterminer la nature de la commande désirée en fonction du niveau du signal analogique présent sur au moins l'une de ses entrées analogiques A1,A1',A2,A3,A4.

Comme nous l'avons décrit en regard de la figure 2, le niveau maximum du signal périodique porte l'information relative à la commande désirée par l'utilisateur. Dans le mode de réalisation préféré de l'invention, quatre commandes différentes sont possibles. Il s'agit de :
- la commande de montée en continu ;
- la commande de descente en continu ;
- la commande de montée en impulsionnel ;
- la commande de descente en impulsionnel.

En pratique le calculateur 400 analyse la valeur numérisée du signal analogique reçu sur au moins l'une des entrées A1,A1',A2,A3,A4. Lorsque cette valeur est comprise entre un seuil inférieur prédéterminé et un seuil supérieur prédéterminé définissant une plage de valeurs correspondant à une commande déterminée, un registre déterminé du calculateur est activé.

L'unité de calcul 450 comporte de plus des moyens de commutation de signe tels que des relais électromagnétiques 451,452 pour déterminer le signe de la tension d'alimentation de puissance qui est disponible sur la liaison d'alimentation de puissance constituée par un premier fil 403 et un second fil 404. Ces relais 451,452 actionnent des contacteurs à deux positions permettant, selon un principe bien connu de l'Homme du Métier, soit de connecter le premier fil 403 sur la borne 491 d'alimentation positive et le fil second fil 404 sur la borne 492 de la masse électrique, soit de connecter le premier fil 403 sur la borne 492 de la masse électrique et de connecter le second fil 404 sur la borne 491 d'alimentation positive.

Le premier fil 403 est relié à une première borne d'alimentation de chaque moteur d'entraînement 411,421,431,441 et le second fil 404 est relié à une seconde borne d'alimentation de chacun desdits moteurs d'entraînement par l'intermédiaire de relais respectivement référencés 413,423,433,et 443.

Ainsi, les moyens de commutation de signe constitués par les relais 451,452 sont communs à tous les modules lève-vitres 410,420,430 et 440.

## Revendications

1. Dispositif lève-vitres pour véhicule, intégrant la fonction d'antipincement, comprenant :
- une unité de calcul (450) comportant notamment:
- une source d'alimentation de puissance (402),
- un calculateur tel qu'un microcontrôleur (400),
- et au moins un module de commande de lève-vitres placé dans une portière du véhicule comportant :
- un moteur d'entraînement (411,421,431,441) pour une vitre de portière ;
- un organe de commande (412,422,432,442), tel qu'un contacteur ou commutateur (150) actionnable par utilisateur ;
caractérisé en ce que la liaison entre ladite unité de calcul (450) et ledit module de commande de lève-vitres est constituée par quatre fils dont deux (143-144,243-244) sur lesquels est transmise la tension d'alimentation de puissance du moteur d'entraînement (411,421, 431,441), les deux autres fils (141-142,341-342) servant à transmettre depuis ledit module de commande de lève-vitres vers ladite unité de calcul un signal périodique permettant simultanément :
- la capture d'une information de commande issue de l'organe de commande (412,422,432,442) ;
- la mesure de la vitesse de rotation du moteur ;
- la détection de la butée haute et/ou de la butée basse de la vitre ;
- le repérage de la position de celle-ci ;
et en ce que le module de commande de lève-vitres comporte des moyens (R1,R2,R3,R4,R5,151,152) pour générer le signal périodique sous la forme d'une tension en créneaux dont :
- la période porte une information sur la vitesse de rotation du moteur ;
- le niveau maximum constitue une information caractéristique de la commande désirée par l'utilisateur.

2. Dispositif selon la revendication 1, caractérisé en ce que l'unité de calcul (450) comporte des moyens (400, 407, 413, 423, 433, 443, 414, 424, 434, 444) pour piloter séquentiellement les modules lève-vitres de chaque portière.

3. Dispositif selon la revendication 2, caractérisé en ce que l'organe de calcul (450) comporte de plus des moyens de commutation de signe (451,452) pour déterminer le signe de la tension d'alimentation de puissance qui est transmise au module de commande de lève-vitres (410 ou 420 ou 430 ou 440) de chaque portière, en fonction du sens de rotation souhaité du moteur d'entraînement (110) dudit module de commande de lève-vitres, ces moyens de commutation de signe (451,452) étant communs à tous les modules lève-vitres (410,420,430,440).

4. Dispositif selon l'une quelconque des revendications précédentes, caractérisé en ce que le module de commande de lève-vitres comporte des moyens tels qu'un aimant (112) et un capteur magnétique (114,314) pour générer une information sur la rotation du moteur d'entraînement (110).

5. Dispositif selon la revendication 4, caractérisé en ce que le capteur magnétique, tel qu'une cellule à effet Hall (314), est alimenté et en ce que sa tension d'alimentation est générée à partir de la tension d'alimentation de puissance du moteur d'entraînement (110) par un circuit électronique de régulation (311,312,313,318,319), permettant de lui assurer un signe constant, c'est à dire indépendant du signe de ladite tension d'alimentation de puissance du moteur d'entraînement, ainsi qu'une amplitude régulée.

6. Dispositif selon la revendication 4, caractérisé en ce que l'unité de calcul (450) comporte des moyens (406,400) pour :
- calculer la vitesse de rotation du moteur d'entraînement (110) par analyse de la période du signal périodique ;
- calculer la position de la vitre par comptage/décomptage des fronts montants du signal périodique ;
et pour en déduire une éventuelle situation de butée haute ou de butée basse de la vitre, ou une situation de pincement lors de le remontée de ladite vitre.

7. Dispositif selon la revendication 6, caractérisé en ce que l'unité de calcul (450) comporte des moyens (400,451,452) pour inverser le signe de la tension d'alimentation de puissance du moteur d'entraînement (411,421,431,441) lorsqu'elle détecte une situation de pincement, afin de commander la redescente de la vitre et de libérer l'objet pincé.

8. Dispositif selon l'une quelconque des revendications précédentes, caractérisé en ce qu'au moins un module de commande de lève-vitres, par exemple celui qui est disposé dans la portière du conducteur, comporte une pluralité de fils de liaison avec l'unité de calcul (450) dont deux (143-144,343-344) sur lesquels est transmise la tension d'alimentation de puissance du moteur d'entraînement (411), les autres fils étant supérieurs à deux et servant à transmettre une pluralité de signaux analogiques de commande sur autant d'entrées analogiques (A1,A1') du microcontrôleur(400).

## Patentansprüche

1. Kraftfahrzeugfensterheber mit Einklemmschutzfunktion vor, umfassend:
- eine Recheneinheit (450), insbesondere mit:
- einer Leistungsstromversorgungsquelle (402),
- einem Rechner, etwa einem Mikrosteuerbaustein (400),
- und mindestens ein in einer Fahrzeugtür angebrachtes Fensterheberbetätigungsmodul mit:
- einem Antriebsmotor (411, 421, 431, 442) für ein Türfenster;
- einem Betätigungsorgan (412, 422, 432, 442), etwa einem Schaltglied oder einem Schalter (150), der durch einen Benutzer zu betätigen ist;
**dadurch gekennzeichnet**, daß die Verbindung zwischen der besagten Recheneinheit (450) und dem besagten Fensterheberbetätigungsmodul aus vier Anschlußdrähten besteht, von denen zwei (143-144, 243-244) die Leistungsspeisespannung des Antriebsmotors (411, 421, 431, 441) übertragen, während die beiden anderen Anschlußdrähte (141-142, 341-342) dazu dienen, von dem besagten Fensterheberbetätigungsmodul zu der besagten Recheneinheit ein periodisches Signal zu übertragen, das die folgenden Vorgänge gleichzeitig ermöglicht:
- die Aufnahme einer vom Betätigungsorgan (412, 422, 432, 442) kommenden Steuerinformation;
- die Messung der Drehzahl des Motors;
- die Erfassung des oberen und/oder unteren Anschlags der Fensterscheibe;
- die Lokalisierung der Position der Fensterscheibe; und daß das Fensterheberbetätigungsmodul Mittel (R1, R2, R3, R4, R5, 151, 152) umfaßt, um das periodische Signal in Form einer Rechteckspannung zu erzeugen, deren:
- Periode eine Information über die Drehzahl des Motors enthält;
- Höchstpegel eine für die durch den Benutzer gewünschte Betätigung charakteristische Information darstellt.

2. Fensterheber nach Anspruch 1, **dadurch gekennzeichnet**, daß die Recheneinheit (450) Mittel (400, 407, 413, 423, 433, 443, 414, 424, 434, 444) für eine sequentielle Steuerung der Fensterhebermodule jeder Tür umfaßt.

3. Fensterheber nach Anspruch 2, **dadurch gekennzeichnet**, daß das Rechenorgan (450) außerdem Vorzeichenumschaltmittel (451, 452) umfaßt, um das Vorzeichen der Leistungsspeisespannung, die an das Fensterheberbetätigungsmodul (410 oder 420 oder 430 oder 440) jeder Tür übertragen wird, in Abhängigkeit von der gewünschen Drehrichtung des Antriebsmotors (110) des besagten Fensterheberbetätigungsmoduls zu bestimmen, wobei diese Vorzeichenumschaltmittel (451, 452) für alle Fensterhebermodule (410, 420, 430, 440) gemeinsam sind.

4. Fensterheber nach einem der vorangehenden Ansprüche, **dadurch gekennzeichnet**, daß das Fensterheberbetätigungsmodul Mittel, etwa einen Magneten (112) und einen Magnetgeber (114, 314), umfaßt, um eine Information über die Drehung des Antriebsmotors (110) zu erzeugen.

5. Fensterheber nach Anspruch 4, **dadurch gekennzeichnet**, daß der Magnetgeber, etwa ein Hall-Element (314), gespeist wird und daß seine Speisespannung aus der Leistungsspeisespannung des Antriebsmotors (110) durch eine elektronische Regelschaltung (311, 312, 313, 318, 319) erzeugt wird, durch die sie mit einem konstanten Vorzeichen, das heißt unabhängig vom Vorzeichen der besagten Leistungsspeisespannung des Antriebsmotors, sowie mit einer geregelten Amplitude versehen werden kann.

6. Fensterheber nach Anspruch 4, **dadurch gekennzeichnet**, daß die Recheneinheit (450) Mittel (406, 400) umfaßt, um:
- die Drehzahl des Antriebsmotors (110) durch eine Analyse der Periode des periodischen Signals zu berechnen;
- die Position der Fensterscheibe durch Aufwärts-/Abwärtszählen der steigenden Flanken des periodischen Signals zu berechnen;
und um daraus eine etwaige obere Anschlagsituation oder untere Anschlagsituation der Fensterscheibe oder eine Einklemmsituation beim Hochfahren der besagten Fensterscheibe abzuleiten.

7. Fensterheber nach Anspruch 6, **dadurch gekennzeichnet**, daß die Recheneinheit (450) Mittel (400, 451, 452) umfaßt, um das Vorzeichen der Leistungsspeisespannung des Antriebsmotors (411, 421, 431, 441) umzukehren, wenn sie eine Einklemmsituation erfaßt, um das Herunterlassen der Fensterscheibe zu betätigen und den eingeklemmten Gegenstand freizugeben.

8. Fensterheber nach einem der vorangehenden Ansprüche, **dadurch gekennzeichnet**, daß mindestens ein Fensterheberbetätigungsmodul, beispielsweise das in der Fahrertür angeordnete Modul, eine Mehrzahl von Anschlußdrähten zur Verbindung mit der Recheneinheit (450) umfaßt, von denen zwei (143-144, 343-344) die Leistungspeisespannung des Antriebsmotors (411) übertragen, während die anderen Anschlußdrähte mehr als zwei sind und zur Übertragung einer Mehrzahl von analogen Steuersignalen an eine entsprechende Anzahl von Analogeingängen (A1, A1') des Mikrosteuerbausteins (400) dienen.

## Claims

1. Window operating apparatus for a vehicle, incorporating the anti-squeeze function, comprising:
- a computer unit (450) including in particular:
- a power source (402),
- a computer such as a microcontroller (400),
- and at least one window operating control module located in a door of the vehicle and including:
- a drive motor (411, 421, 431, 441) for a door window;
- a control member (412, 422, 432, 442), such as a contactor or switch (150) for user actuation;
characterised in that the connection between the said computer unit (450) and the said window operating control module consists of four wires, on two of which (143-144, 243-244) is transmitted the power supply voltage for the drive motor (411, 421, 431, 441), with the other two wires (141-142, 341-342) serving to transmit from the said window operating control module to the said computer unit a periodic signal which permits, simultaneously:
- capture of a control signal from the control member (412, 422, 432, 442);
- measurement of the speed of rotation of the motor;
- detection of the upper end and/or the lower end of the travel of the window;
- marking of the position of the latter;
and in that the window operating control module includes means (R1, R2, R3, R4, R5, 151, 152) for generating the periodic signal in the form of a square wave voltage in which:
- the period carries an information signal as to the speed of rotation of the motor;
- the maximum level constitutes an information signal characteristic of the control desired by the user.

2. Apparatus according to Claim 1, characterised in that the computer unit (450) includes means (400, 407, 413, 423, 433, 443, 414, 424, 434, 444) for sequentially governing the window operating control modules of each door.

3. Apparatus according to Claim 2, characterised in that the computer unit (450) further includes sign changing means (451, 452) for determining the sign of the power supply voltage which is transmitted to the window operating control module (410 or 420 or 430 or 440) of each door, as a function of the desired direction of rotation of the drive motor (110) of the said window operating control module, the said sign changing means (451, 452) being common to all the window operating modules (410, 420, 430, 440).

4. Apparatus according to any one of the preceding Claims, characterised in that the window operating control module includes means such as a magnet (112) and a magnetic sensor (114, 314) for generating an information signal as to the rotation of the drive motor (110).

5. Apparatus according to Claim 4, characterised in that the magnetic sensor, such as a Hall effect cell (314), is powered, and in that its supply voltage is generated from the power supply voltage of the drive motor (110) by an electronic regulating circuit (311, 312, 313, 318, 319), so as to ensure for it a constant sign, that is to say a sign independent of the sign of the said power supply voltage for the drive motor, together with a regulated amplitude.

6. Apparatus according to Claim 4, characterised in that the computer unit (450) includes means (406, 400) for:
- calculating the speed of rotation of the drive motor (110) by analysis of the period of the periodic signal;
- calculating the position of the window by counting up or down the rising fronts of the periodic signal;
and for deducing therefrom any situation of physical engagement at the top or bottom of the window, or a squeezing situation during raising of the said window.

7. Apparatus according to Claim 6, characterised in that the computer unit (450) includes means (400, 451, 452) for reversing the sign of the power supply voltage for the drive motor (411, 421, 431, 441) when it detects a squeezing situation, whereby to command lowering of the window and to release the object squeezed.

8. Apparatus according to any one of the preceding Claims, characterised in that at least one window operating control module, for example that one which is disposed in the driver's door, includes a plurality of wires for connection with the computer unit (450), on two of which (143-144, 343-344) is transmitted the power supply voltage for the drive motor (411), the other wires being more than two in number and serving to transmit a plurality of analogue control signals to a corresponding number of analogue inputs (A1, A1') of the microcontroller (400).
